**Europäisches Patentamt**

**European Patent Office**

**Office européen des brevets**

(11) Numéro de publication : **0 417 011 B1**

(12)

# FASCICULE DE BREVET EUROPEEN

(45) Date de publication du fascicule du brevet :
**09.12.92 Bulletin 92/50**

(51) Int. Cl.⁵ : **A01K 87/02**

(21) Numéro de dépôt : **90402472.6**

(22) Date de dépôt : **07.09.90**

(54) **Système de téléréglage pour canne à pêche téléscopique à éléments coniques.**

(30) Priorité : **08.09.89 FR 8911782**

(43) Date de publication de la demande :
**13.03.91 Bulletin 91/11**

(45) Mention de la délivrance du brevet :
**09.12.92 Bulletin 92/50**

(84) Etats contractants désignés :
**AT BE CH DE DK ES FR GB GR IT LI LU NL SE**

(56) Documents cités :
**FR-A- 1 491 257**
**FR-A- 2 031 863**
**FR-A- 2 082 470**
**FR-E- 91 945**

(73) Titulaire : **Melin, Laurent**
**1 Cité de la Tresse**
**F-52800 Nogent (FR)**

(72) Inventeur : **Melin, Laurent**
**1 Cité de la Tresse**
**F-52800 Nogent (FR)**
Inventeur : **Melin, Cyriaque**
**1 Cité de la Tresse**
**F-52800 Nogent (FR)**

(74) Mandataire : **Bruder, Michel**
**Cabinet Michel Bruder Conseil en Brevets 10,**
**rue de la Pépinière**
**F-75008 Paris (FR)**

# Description

La présente invention concerne un système de téléréglage pour canne à pêche télescopique à éléments tronconiques.

La réalisation d'une canne à pêche télescopique de longueur ajustable, lorsqu'elle est formée d'éléments tronconiques, est un problème non encore résolu à ce jour. A cet égard, la demande de brevet française FR-1 491 257, déposée le 14 avril 1966 par la société dite "LA CANNE A PECHE" et son certificat d'addition FR-2 082 470, déposé le 17 mars 1970, concernent un dispositif de liaison entre les éléments coulissants, tronconiques ou cylindriques, d'un dispositif télescopique du type d'une canne à pêche, caractérisé par le fait que chaque élément coulissant est muni, à une extrémité, d'une pièce d'accouplement constituée par une bague élastiquement déformable se prolongeant au-delà de ladite extrémité, et, à l'autre extrémité, d'une couronne élastique formant butée et organe de centrage. Quelle que soit la position relative des éléments coulissants, leur blocage est assuré d'une façon automatique par le frottement de la bague élastiquement déformable sur l'élément tronconique ou cylindrique intérieur qu'elle entoure. Dans un tel dispositif, la fonction de la bague élastiquement déformable est ainsi de procurer un téléréglage des éléments coulissants, tandis que la couronne élastique, placée au "talon" de l'élément tronconique ou cylindrique intérieur, sert exclusivement comme organe de centrage et de butée.

Or, une telle répartition des fonctions de blocage et de centrage d'un système de téléréglage pour éléments coulissants d'un dispositif téléscopique n'est pas satisfaisante,, car elle conduit aux inconvénients suivants :

- la bague élastiquement déformable placée au "nez" de l'élément tronconique extérieur pour enserrer l'élément tronconique intérieur présente une partie en tronc de cône fendu longitudinalement suivant plusieurs génératrices, de manière à déterminer des languettes élastiques permettant d'absorber les variations de conicité de l'élément tronconique intérieur ; or, l'élasticité des languettes ainsi délimitées est le plus souvent insuffisant pour permettre un blocage satisfaisant desdits éléments entre eux. De ce fait, la flexion est toujours assistée par des éléments élastiques, tels que des bagues, des tores en caoutchouc ou en matière plastique, voire des bagues métalliques fendues.

- par ailleurs, le comportement de l'organe de centrage et de butée placé au "talon" de chaque élément tronconique n'est pas stable, ses déformations sous l'effet de la rétraction de l'élément tronconique intérieur dans l'élément tronconique extérieur étant souvent incontrôlées, ce qui provoque le blocage desdits éléments tronconiques ; à cet égard, on peut remarquer que de nombreux essais ont été faits dans ce domaine, mais aussi bien les géométries employées (collerettes ou nervures en saillie risquant de s'introduire dans l'interstice des deux éléments) que les matériaux utilisés (caoutchouc ou matières plastiques insuffisamment résistants à l'usure) pour réaliser cet organe de centrage et de butée n'ont, jusqu'à présent, fourni de bons résultats.

La présente invention vise à remédier à ces inconvénients en proposant un système de téléréglage pour canne à pêche télescopique à éléments tronconiques emboîtés, chaque élément tronconique extérieur comportant, à sa petite base, une bague de serrage élastique de la paroi externe de l'élément tronconique intérieur emboîté dans cet élément tronconique extérieur, cette bague de serrage élastique coopérant avec un organe tubulaire élastique emmanché dans la grande base de ce même élément tronconique intérieur, cet organe tubulaire comprenant au moins une lèvre annulaire, crênelée ou non, disposée dans un plan transversal et dénommée par la suite "lèvre annulaire transversale", cette dernière exerçant une force centrifuge contre la paroi interne dudit élément extérieur.

Le système de téléréglage conforme à l'invention est caractérisé en ce que :

- d'une part, en ce que la bague de serrage élastique présente au moins une lèvre annulaire déformable, également disposée dans un plan transversal et dénommée "lèvre annulaire transversale", exerçant une force centripète contre la paroi externe de l'élément tronconique intérieur, cette lèvre annulaire étant munie de moyens de compensation des contraintes radiales s'exerçant sur elle du fait du coulissement de cet élément tronconique intérieur dans l'élément tronconique extérieur associé ; ces moyens de compensation maintiennent ladite lèvre d'une manière stable autour de l'axe longitudinal commun desdits éléments tronconiques, dans toutes les positions de déploiement de ces derniers,

- d'autre part, en ce que l'organe tubulaire élastique présente au moins un dégagement annulaire situé du côté de la grande base de l'élément tronconique intérieur par rapport à la lèvre annulaire transversale, crênelée ou non, qui exerce une force centrifuge contre la paroi interne de l'élément extérieur, ce dégagement annulaire permettant à ladite lèvre de se replier progressivement et complétement vers l'avant de la canne, sans se trouver coincée dans le jeu des deux éléments tronconiques lors des manoeuvres de rétraction de l'élément intérieur dans l'élément extérieur.

Ainsi, on remarquera que d'une manière nouvelle et inattendue, l'organe tubulaire élastique n'a pas un rôle statique de centrage et de butée, mais permet, au contraire, de contrôler la dynamique des mouvements de coulissement d'un élément tronconique intérieur engagé axialement dans un élément tronconique extérieur pour constituer un dispositif télescopique du type d'une canne à pêche. A cet égard, la lèvre annulaire transversale, crênelée ou non, qui exerce une force centrifuge contre la paroi interne de l'élément extérieur, fléchit longitudinalement vers l'arrière lors du déploiement de l'élément intérieur jusqu'à atteindre son diamètre hors-tout minimal lorsque l'extension de la canne télescopique est maximale, cette manoeuvre ne posant aucun problème de fonctionnement, si ce n'est la résistance mécanique à la flexion de la lèvre elle-même. Puis, lorsque l'élément intérieur est replié dans l'élément extérieur, cette lèvre annulaire subit une forte contrainte tendant à l'arracher, ou à provoquer son blocage dans le jeu existant entre les deux éléments tronconiques, jeu qui s'élargit progressivement du fait du retrait de l'élément intérieur vers l'arrière de la canne ; selon l'invention, le dégagement annulaire prévu à l'avant de ladite lèvre annulaire permet, en quelque sorte, de réserver un logement à ladite lèvre avant que la différence des diamètres des éléments tronconiques intérieur et extérieur devienne suffisante pour permettre à cette dernière de se redresser complétement. Dans cette manoeuvre, les déformations de la lèvre annulaire sont ainsi parfaitement contrôlées, ce qui lui permet de garder un contact permanent avec la paroi interne de l'élément extérieur, procurant, du même coup, un téléréglage sûr et efficace des éléments tronconiques entre eux.

Selon la présente invention, le contrôle du téléréglage de deux éléments tronconiques emboîtés est alors principalement réalisé par évolution de l'épaisseur de la lèvre annulaire transversale, crênelée ou non, exerçant une force centrifuge sur la paroi interne de l'élément extérieur, à savoir : plus la conicité de l'élément tronconique extérieur est grande, plus la lèvre annulaire doit être large. A l'inverse, pour rattraper une conicité faible, la lèvre annulaire pourra être de moindre épaisseur, ou encore être crênelée.

Dans ces conditions, la bague de serrage manchonnée du côté de la petite base de l'élément tronconique extérieur n'a plus le téléréglage comme rôle principal, mais résout un autre inconvénient des systèmes de téléréglage antérieurement connus qui ne permettent pas un rattrapage stable du jeu des éléments tronconiques emboîtés ; or, le battement des éléments tronconiques d'une canne à pêche télescopique rend cette dernière pratiquement inutilisable en ce qu'il modifie d'une manière catastrophique "l'action" de la canne, c'est-à-dire ses capacités de déformation élastique, nécessaires, en situation de pêche, à un "ferrage" sec du poisson. La bague de serrage, objet de la présente invention, est spécialement conçue pour supprimer ce battement, et ce, dans toutes les positions longitudinales mutuelles des deux éléments tronconiques qu'elle équipe. En particulier, lorsque l'élément tronconique intérieur est complètement rentré dans l'élément tronconique extérieur, le jeu entre ces deux éléments tronconiques est maximal, et d'autant plus important que leur différence de conicité est grande.

Par ailleurs, il est évident que la bague de serrage périphérique placée à l'avant d'un élément tronconique extérieur contribue également au blocage et au téléréglage de l'élément intérieur qu'elle enserre. Mais il est prévu, selon une autre caractéristique de l'invention, que les forces de friction agissant sur l'élément tronconique intérieur du fait de l'action centrifuge de la bague de serrage ne représente que le quart environ des forces de friction totales nécessaires à un téléréglage correct des éléments tronconiques entre eux. A l'inverse, les forces de friction exercées par l'organe tubulaire élastique placé à l'arrière de l'élément tronconique intérieur sur la paroi interne de l'élément tronconique extérieur, contribue, pour les trois quarts restant, aux forces de friction totales nécessaires au téléréglage.

D'autres caractéristiques et avantages du système de téléréglage objet de la présente invention ressortiront mieux de la description qui va suivre de plusieurs variantes de mise en oeuvre de ce système, données à titre d'exemples non limitatifs, en référence aux dessins annexés, sur lesquels :

- la figure 1a est une vue en perspective avec coupes partielles des extrémités de deux éléments tronconiques emboîtés munis du système de téléréglage conforme à la variante préférée de l'invention,
- la figure 1b est une vue comprenant deux demies coupes longitudinales de la bague de serrage manchonnée à l'avant d'un élément tronconique extérieur et représentée sur la figure 1a, la demie coupe inférieure correspondant au cas où la canne télescopique doit être équipée d'anneaux guide-fil, la demie coupe supérieure correspondant au cas inverse,
- les figures 2a, 2b, 2c sont des vues en coupes longitudinales de la bague de serrage montée sur l'élément tronconique extérieur pour enserrer l'élément tronconique intérieur, ces figures montrant l'évolution de la forme de cette bague lors des manoeuvres de coulissement de l'élément intérieur dans l'élément extérieur,
- la figure 3 est une vue en coupe longitudinale d'une autre forme d'exécution d'une bague de serrage pour éléments tronconiques,
- la figure 4 est une vue en coupe longitudinale d'une troisième forme d'exécution d'une bague de serrage pour éléments tronconiques,
- la figure 5 est une vue en coupe longitudinale d'une quatrième forme d'exécution d'une bague de serrage pour éléments tronconiques,
- la figure 6 est une vue en perspective avec coupes partielles d'une autre forme de réalisation d'un organe tubulaire élastique disposé à l'arrière d'un élément tronconique intérieur, cet organe tubulaire étant crênelé et muni d'évents longitudinaux,

- la figure 7 est une vue en perspective avec coupes partielles d'une troisième forme de réalisation d'un organe tubulaire élastique disposé à l'arrière d'un élément tronconique intérieur, particulièrement adapté au téléréglage d'éléments tronconiques ayant une très forte conicité.

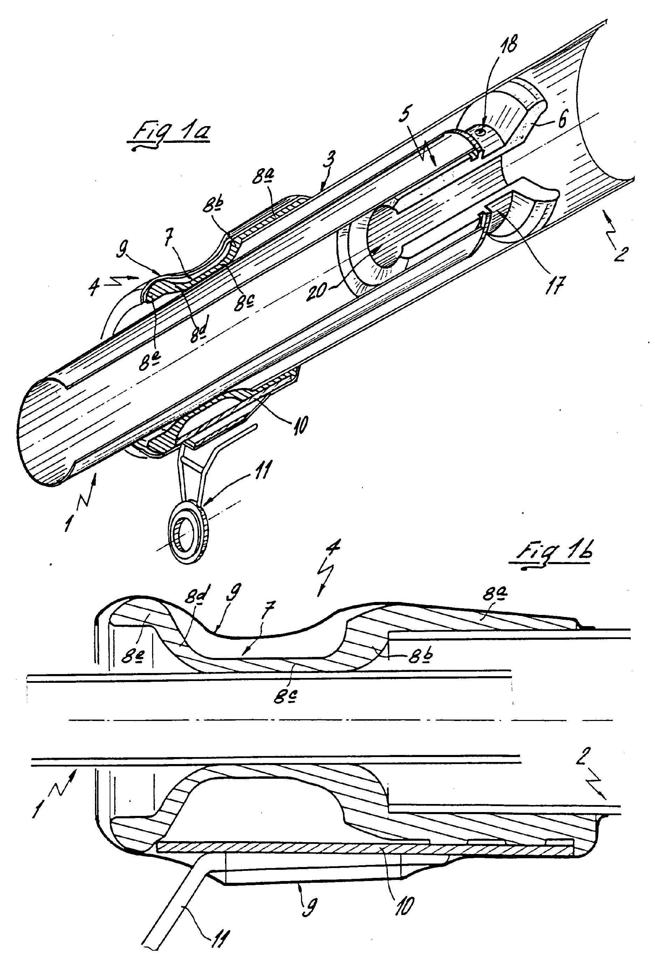

Sur la figure 1a, on a représenté une vue éclatée de l'emboitement de deux éléments tronconiques intérieur 1 et extérieur 2 faisant partie d'une canne à pêche télescopique. L'extrémité avant 3 de l'élément extérieur 2 est munie d'une bague de serrage élastique 4 exerçant une force centripète sur la paroi externe de l'élément intérieur 1. Cette bague de serrage 4 coopère avec un organe tubulaire élastique 5 emmanché dans l'extrémité arrière 6 de l'élément intérieur 1, et qui exerce, par l'intermédiaire d'une lèvre annulaire transversale 6, une force centrifuge sur la paroi interne de l'élément extérieur 2. La somme des forces de friction ainsi exercées permet de positionner d'une manière stable l'élément intérieur 1 le long de l'élément extérieur 2.

Selon la présente invention, la bague de serrage élastique 4 présente une lèvre annulaire transversale déformable 7 exerçant une force centripète contre la paroi externe de l'élément intérieur 1. Cette lèvre annulaire 7 est munie de moyens de compensation des contraintes radiales s'exercant sur elle lors du coulissement de cet élément intérieur 1 dans l'élément extérieur 2, ces moyens de compensation étant chargés de maintenir ladite lèvre 7 d'une manière stable autour de l'axe longitudinal commun desdits éléments tronconiques 1 et 2, c'est-à-dire d'assurer leur centrage dans toutes les positions de déploiement de ces derniers.

Dans la forme d'exécution représentée sur les figures 1a et 1b, la bague annulaire 4 est constituée de cinq parties annulaires juxtaposées 8a, 8b, 8c, 8d et 8e, réalisées par usinage ou moulage d'un matériau élastique dont la dureté est comprise entre 50 et 65 sur l'échelle de dureté Shore ; par exemple, on pourra utiliser un élastomère de polyuréthane connu sous les dénominations commerciales "Eladur" ou "Eladip". Un tel matériau présente une résistance à l'entaille très élevée, ce qui est absolument nécessaire étant donné la rugosité de la surface des éléments tronconiques 1 et 2, généralement fabriqués, dans les techniques modernes, en fibres de verre ou en fibres de carbone (rubans de tels fibres enroulés à recouvrement autour d'un mandrin) ; on a ainsi mis en évidence qu'un matériau plus classique, du type d'un caoutchouc ou d'un plastique, s'usait trop rapidement. En outre, l'élastomère "Eladur" ou "Eladip" reste très adhérent lorsqu'il est mouillé, ce qui n'est pas le cas de certains autres matériaux de même dureté ; or, certains pêcheurs désirent pêcher sous la pluie, et il peut également arriver que la canne télescopique tombe à l'eau. Dans ce cas, il faut malgré tout que le téléréglage de la canne garde toute son efficacité, ce que procure l'élastomère choisi.

La bague de serrage 4 est manchonnée et collée autour de l'extrémité avant 3 de l'élément extérieur 2 par l'intermédiaire d'une partie annulaire de fixation 8a ; cette dernière peut être peu épaisse, mais possède au moins une génératrice interne rectiligne engendrant une paroi interne cylindrique d'un diamètre sensiblement égal au diamètre extérieur de l'élément tronconique extérieur 2.

Cette première partie annulaire 8a est prolongée vers l'avant de la canne par une partie annulaire de renfort 8b, suivie d'une partie annulaire centrale 8c mince et d'une partie annulaire intermédiaire 8d définissant, ensemble, la lèvre annulaire transversale déformable 7 qui est chargée d'exercer une force centripète contre la paroi externe de l'élément intérieur 1. La partie annulaire centrale 8c, à génératrices interne et externe rectilignes, présente ainsi un diamètre intérieur pouvant s'étendre depuis un diamètre minimal sensiblement égal au diamètre de la petite base de l'élément tronconique intérieur 1 jusqu'à un diamètre maximal sensiblement égal au diamètre de la grande base de ce même élément tronconique intérieur 1, ce qui permet à la paroi interne de cette partie annulaire centrale 8c de rester en contact permanent avec la paroi externe de l'élément intérieur 1 quelque soit la position de ce dernier le long de l'élément extérieur 2. Par ailleurs, les génératrices interne et externe de la partie annulaire de renfort 8b sont courbes, avec une concavité tournée vers l'intérieur de la bague de serrage 4 ; selon l'invention, la courbure de la génératrice externe est préférentiellement supérieure à la courbure de la génératrice interne, ces deux génératrices étant tangentes aux génératrices rectilignes de la partie annulaire centrale 8c. De cette façon, la lèvre annulaire élastique déformable 7 s'amincit progressivement vers l'avant de l'élément tronconique extérieur 2. Cette progressivité dans la diminution de la section et de l'épaisseur de la bague de serrage 4 en direction de sa zone élastique "active", à savoir la partie annulaire centrale 8c, permet de limiter la déformation de ladite lèvre annulaire 7 vers l'arrière, et d'éviter son blocage entre les deux éléments tronconiques 1 et 2 lors des manoeuvres de rétraction de l'élément intérieur 1 dans l'élément extérieur 2.

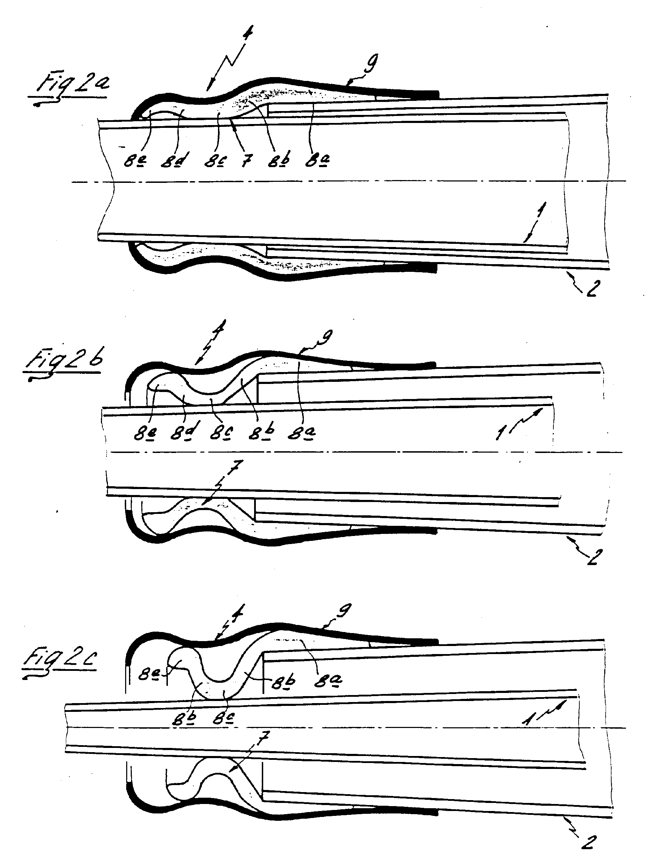

Enfin, la partie annulaire intermédiaire 8d - qui possède des génératrices interne et externe courbes à concavité tournée vers l'intérieur, tangentes aux génératrices rectilignes de la partie annulaire centrale 8c - est prolongée vers l'avant par une partie annulaire terminale 8e à génératrice interne rectiligne, et à génératrice externe rectiligne ou courbe, dont la concavité est tournée vers l'intérieur de la bague de serrage 4. Cette partie annulaire terminale 8e présente un diamètre intérieur sensiblement égal au diamètre intérieur de la partie annulaire de fixation 8a, et son profil extérieur est prévu de telle sorte que la bague de serrage 4 prenne appui en permanence sur la surface interne d'une gaine thermorétractable rigide 9 (demi-coupe supérieure de la figure 1b) de manière à procurer un appui triangulé à la lèvre annulaire 7 dans toutes les positions longitudinales mutuelles des éléments tronconiques 1 et 2. A cet égard, on a représenté, sur les figures 2a, 2b et 2c, l'évolution de la forme de la bague de serrage 4, conforme à cette forme d'exécution préférée de l'invention, lors des manoeuvres de coulissement de l'élément tronconique interieur 1 dans l'élément tronconique extérieur 2. La bague de serrage 4, en coopérant ainsi dans toutes ses formes avec la gaine thermorétractable rigide 9, procure une compensation simple et efficace des contraintes radiales s'exerçant sur la lèvre annulaire transversale déformable 7, permettant un centrage stable des éléments tronconiques 1 et 2 selon leur axe longitudinal commun, empêchant, par conséquent, le battement nuisible à "l'action" de la canne télescopique en situation de pêche.

Conformément à la demi-coupe inférieure de la figure 1b, la bague élastique 4 peut également être munie d'une virole cylindrique rigide 10, servant, d'une part, de moyen de compensation des contraintes radiales exercées sur la lèvre annulaire transversale 7, et, d'autre part, de support pour la fixation d'un anneau guide-fil 11.

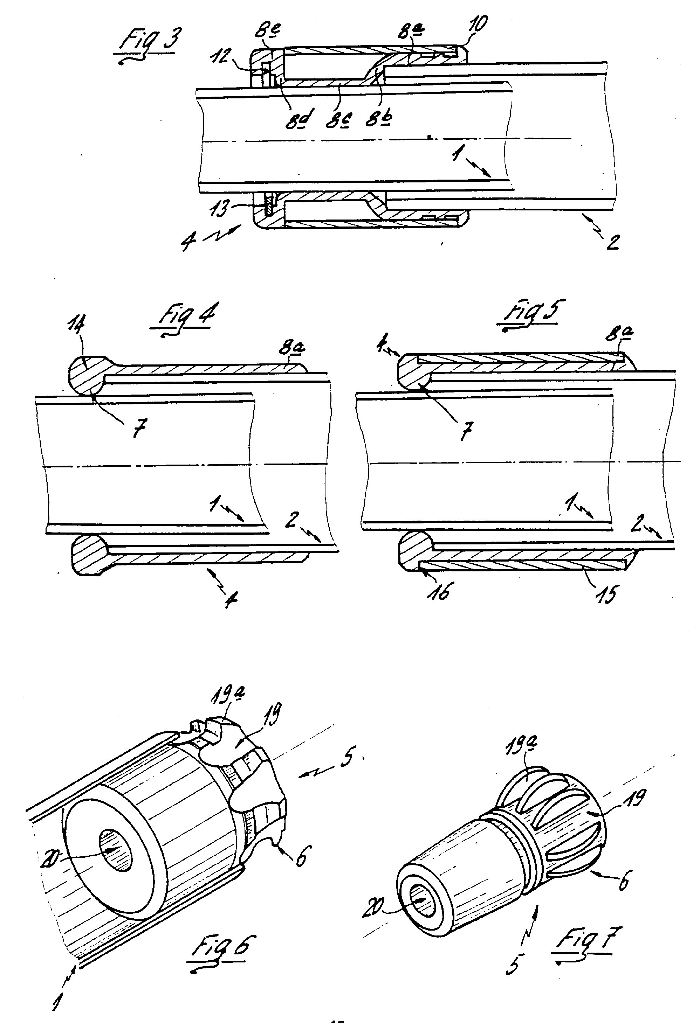

Par ailleurs, conformément à la figure 3, les déformations de la partie annulaire terminale 8e de la bague de serrage élastique 4 peuvent être limitées par la réalisation d'une rainure interne 12 dans laquelle peut s'encastrer un élément de renfort élastique du type d'un circlip 13. Ce circlip 13 contribue également à la compensation des contraintes radiales exercées sur la lèvre annulaire 7.

Dans une autre forme de réalisation de la bague de serrage élastique 4, décrite en référence aux figures 4 et 5, la partie annulaire de fixation 8a est prolongée directement par une lèvre annulaire transversale déformable 7 à génératrice interne courbe présentant une concavité tournée vers l'intérieur de ladite bague de serrage 4. La surface interne sensiblement torique ainsi générée vient frotter contre la surface externe de l'élément intérieur 1. Dans cette variante, on peut envisager deux types de compensation des contraintes radiales exercées par l'élement tronconique intérieur 1 lors de son coulissement dans l'élement tronconique extérieur 2, à savoir :

- conformément à la figure 4, un renflement torique 14 entourant la lèvre annulaire 7 et augmentant sa section afin d'éviter son arrachement et de contribuer au centrage des éléments tronconiques 1 et 2.

- conformément à la figure 5, une virole cylindrique rigide 15, entourant complétement la bague de serrage 4, et procurant une assise stable à la lèvre annulaire 7, tout en évitant son arrachement. Dans ce cas, la paroi cylindrique externe de cette lèvre 7 est engendrée par une génératrice rectiligne, présentant un décrochement terminal vers l'extérieur afin de définir un épaulement annulaire 16 servant au blocage longitudinal de la virole 15 vers l'avant de l'élément tronconique extérieur 2, et empêchant cette dernière de s'échapper lors des manoeuvres de rétraction de l'élément intérieur 1 dans l'élément extérieur 2.

Dans les deux cas, la profondeur de la lèvre annulaire 7, ainsi que sa largeur, sont adaptées à la conicité de l'élément tronconique intérieur 1 qu'elle enserre ; à cet égard, plus la conicité est grande, plus la lèvre 7 doit être profonde, et moins elle doit être large. Pour rester efficace, la compensation fournie par le renflement torique 14 ou par la virole 15 doit ainsi s'écarter longitudinalement d'autant moins de l'appui de la lèvre 7 sur la surface externe de l'élément intérieur 1 que la profondeur de ladite lèvre 7 est grande : en effet, les forces de compensation peuvent alors efficacement s'exercer dans une direction radiale, la composante transversale de ces forces de compensation devant demeurer faible.

On décrira maintenant plus en détail, en référence aux figures 1 et 6, diverses formes de réalisation de l'organe tubulaire élastique 5 qui est emmanché dans l'extrémité arrière 6 de l'élément intérieur 1 pour assurer le téléréglage des éléments tronconiques emboîtés 1 et 2. De même que la bague de serrage 4, cet organe tubulaire 5 est fabriqué par moulage ou par usinage d'un élastomère de polyuréthane de dureté convenable, et préférentiellement, on utilisera encore de l'élastomère "Eladur", ou "Eladip".

Conformément à la figure 1, on rappelle que le téléréglage des éléments 1 et 2 est dû à l'action d'une lèvre annulaire transversale 6 exerçant, de manière élastique, une force centrifuge sur la paroi interne de l'élément extérieur 2. Selon la présente invention, l'organe tubulaire élastique 5 présente au moins un dégagement annulaire 17 situé du côté de la grande base de l'élément tronconique intérieur 1 par rapport à la lèvre annulaire transversale 6. Lors des manoeuvres de rétraction de l'élément intérieur 1 dans l'élément extérieur 2, le dégagement annulaire 17 permet à ladite lèvre 6 de se replier progressivement et complètement vers l'avant de la canne sans se trouver coincée dans l'interstice des deux éléments tronconiques 1 et 2 ; cette disposition de l'invention remédie ainsi d'une manière simple au principal inconvénient des dispositifs antérieurs déjà mentionnés.

Les diverses variantes de l'organe tubulaire 5 concernent les adaptations de ce principe général de l'invention aux caractéristiques géométriques des éléments tronconiques 1 et 2 sur lequel est monté cet organe tubulaire 5. En particulier, l'évolution de l'épaisseur de la lèvre annulaire transversale 6, en combinaison avec la dureté de l'élastomère employé (qui peut varier entre 50 et 65 sur l'échelle de dureté Shore), permet de régler la fermeté des manoeuvres de coulissement des éléments tronconiques 1 et 2 ainsi que la résistance de leur blocage : à cet égard, plus la conicité de l'élément tronconique extérieur 2 est forte, plus la lèvre annulaire 6 doit être large. A l'inverse, pour rattraper une conicité faible, la lèvre annulaire 6 pourra être de moindre épaisseur, ou encore être crênelée.

Dans la forme d'exécution représentée sur la figure 1, les éléments tronconiques 1 et 2 sont d'assez fortes conicités, et la lèvre annulaire 6 représentée n'est pas crênelée mais présente une face d'appui périphérique continue sur la paroi interne de l'élément extérieur 2. Dans cette variante, il est prévu de ménager, par exemple au niveau du dégagement annulaire 17, un orifice radial 18 d'échappement et d'admission de l'air emprisonné dans l'interstice des deux éléments tronconiques 1 et 2.

Sur la figure 6, qui est une vue en perspective avec coupes partielles d'une autre forme de réalisation de l'organe tubulaire élastique 5, il est prévu des évents longitudinaux 19 jouant le même rôle que l'orifice radial 18 lors des manoeuvres de coulissement de l'élément intérieur 1 dans l'élément extérieur 2. Cette disposition de l'invention, si elle diminue d'autant la surface de la lèvre annulaire transversale 6 se trouvant en appui élastique sur la paroi interne de l'élément intérieur 1, offre l'avantage de supprimer l'amorce de déchirure constituée par ledit orifice radial 18 au niveau du dégagement annulaire 17. La diminution de la surface d'appui de la lèvre annulaire 6 qui, de ce fait, est crênelée, est compensée, pour une même conicité, par le choix d'un élastomère plus dur. Un autre avantage de cette variante est de permettre un échappement et une admission d'air plus importante, ce qui limite d'autant les risques de déformation vers l'arrière de la lèvre annulaire transversale 7 de la bague de serrage élastique 4, manchonnée et collée à l'avant de l'élément extérieur 2 ; en effet, cette lèvre annulaire 7 peut, lors d'une telle déformation due à l'appel d'air créé par la rétraction de l'élément intérieur 1 dans l'élément extérieur 2, venir se bloquer dans le jeu des deux éléments tronconiques 1 et 2. La réalisation d'évents longitudinaux 19 largement dimensionnés, tels ceux représentés sur la figure 6, permet donc d'éviter d'avoir à renforcer d'une manière trop importante les moyens de renfort de la lèvre annulaire 7 de la bague de serrage élastique 4.

La figure 7 représente une autre forme d'exécution de l'organe tubulaire 5 particulièrement adaptée au téléréglage d'éléments tronconiques 1 et 2 ayant une très forte conicité, tels que les éléments tronconiques terminaux d'une canne à pêche télescopique (scion et porte-scion). Dans cette variante, les évents 19 sont très largement dimensionnés et délimitent des nervures longitudinales 19a dans la lèvre annulaire 6 ; ces nervures 19a possèdent une élasticité transverse qui contribue au contrôle des déformations de la lèvre annulaire 6, et évite le blocage des éléments tronconiques et 2 en rentrée de canne.

Par ailleurs, le renfort de l'organe tubulaire 5 lors des déformations qu'il subit est assuré par un contrôle précis de ses dimensions intérieures. A cet égard, cet organe tubulaire 5 est alésé selon son axe longitudinal, le diamètre de cet alésage 20 (figures 1, 6 et 7) définissant une épaisseur radiale minimale empêchant la lèvre annulaire transversale 6, lors des manoeuvres de rétraction de l'élément intérieur 1 dans l'élément extérieur 2, de dépasser son dégagement annulaire 17 et de se loger entre les deux éléments tronconiques 1 et 2, provoquant leur blocage.

La présente invention n'est bien entendu pas limitée par la description qui vient d'en être donnée ou par les dessins annexés, mais s'étend, au contraire, à toutes formes formes d'exécution d'un système de téléréglage pour éléments tronconiques réalisée dans son esprit.

**Revendications**

1. Système de téléréglage pour canne à pêche télescopique à éléments tronconiques emboîtés, chaque élément tronconique extérieur (2) comportant, à sa petite base, une bague de serrage (4) élastique de la paroi externe de l'élément tronconique intérieur (1) emboîté dans cet élément tronconique extérieur (2), cette bague de serrage (4) élastique coopérant avec un organe tubulaire (5) élastique emmanché dans la grande base de ce même élément tronconique intérieur (1), cet organe tubulaire (5) comprenant au moins une lèvre annulaire (6) transversale, crênelée ou non, exerçant une force centrifuge contre la paroi interne dudit élément extérieur (2), système caractérisé :

   - d'une part, en ce que la bague de serrage (4) élastique présente une lèvre annulaire (7) transversale déformable exerçant une force centripète contre la paroi externe de l'élément intérieur (1), cette lèvre annulaire (7) étant munie de moyens de compensation des contraintes radiales (9,15) s'exerçant sur elle du fait du coulissement de l'élément tronconique intérieur (1) dans l'élément tronconique extérieur (2) associé, ces moyens de compensation maintenant ladite lèvre (7) d'une manière stable autour de l'axe longitudinal commun desdits éléments tronconiques (1, 2), dans toutes les positions de déploiement de ces derniers,

   - d'autre part, en ce que l'organe tubulaire (5) élastique présente au moins un dégagement annulaire (17) situé du côté de la grande base de l'élément tronconique intérieur (1) par rapport à la lèvre annulaire (6) transversale, crénelée ou non, qui exerce une force centrifuge contre la paroi interne de l'élément extérieur (2), ce dégagement annulaire (17) permettant à ladite lèvre annulaire (6) de se replier progressivement et complétement vers l'avant de la canne sans se trouver coincée dans l'interstice des deux éléments tronconiques (1, 2) lors des manoeuvres de rétraction de l'élément intérieur (1) dans l'élément extérieur (2).

2. Système de téléréglage selon la revendication 1, caractérisé en ce que le contrôle du téléréglage de deux éléments tronconiques (1, 2) emboîtés est principalement assuré par l'organe tubulaire (5) élastique, emmanché à l'arrière de l'élément intérieur (1), par évolution de l'épaisseur de la lèvre annulaire (6) transversale en fonction de la conicité de l'élément tronconique extérieur (2), la lèvre annulaire (6) devant être d'autant plus large que la conicité de l'élément extérieur (2) est plus forte.

3. Système de téléréglage selon la revendication 2, caractérisé en ce que les forces de friction centrifuges agissant sur la paroi externe de l'élément tronconique intérieur (1), du fait de l'action de la bague de serrage (4) élastique disposée à l'avant de l'élément tronconique extérieur (2), ne représente que le quart environ des forces de friction totales nécessaires à un téléréglage correct des éléments tronconiques (1, 2) entre eux, les forces de friction centripètes exercées par l'organe tubulaire (5) élastique placé à l'arrière de l'élément tronconique intérieur (1) sur la paroi interne de l'élément tronconique extérieur (2), contribuant à ces mêmes forces de friction totales pour les trois quarts restant.

4. Système de téléréglage selon l'une quelconque des revendications précédentes, caractérisé en ce que la bague de serrage (4) élastique, disposée à l'avant d'un élément tronconique extérieur (2) pour enserrer un élément tronconique intérieur (1), comporte successivement, de l'arrière vers l'avant dudit élément extérieur (2) :
- une partie annulaire de fixation (8a) à génératrice interne rectiligne pouvant être manchonnée autour de l'extrémité avant de l'élément tronconique extérieur (2),
- et une lèvre annulaire (7) transversale déformable à génératrice interne courbe présentant une concavité tournée vers l'intérieur de ladite bague de serrage (4).

5. Système de téléréglage selon la revendication 4, caractérisé en ce que les moyens de compensation des contraintes radiales s'exerçant sur la lèvre annulaire (7) transversale déformable du fait du coulissement de l'élément tronconique intérieur (1) dans l'élément tronconique extérieur (2) sont constitués par un renflement torique (14) entourant ladite lèvre annulaire (7) et augmentant sa section.

6. Système de téléréglage selon la revendication 4, caractérisé en ce que les moyens de compensation des contraintes radiales s'exerçant sur la lèvre annulaire (7) transversale déformable du fait du coulissement de l'élément tronconique intérieur (1) dans l'élément tronconique extérieur (2) associé sont constitués par une virole cylindrique rigide (15), entourant complétement la bague de serrage (4), et procurant une assise stable à ladite lèvre (7) tout en évitant son arrachement.

7. Système de téléréglage selon l'une quelconque des revendications 1 à 3, caractérisé en ce que la bague de serrage (4) élastique, disposée à l'avant d'un élément tronconique extérieur (2) pour enserrer un élément tronconique intérieur (1), comporte successivement, de l'arrière vers l'avant dudit élément extérieur (2) :
- une partie annulaire de fixation (8a), à génératrice interne rectiligne, pouvant être manchonnée autour de l'extrémité avant de l'élément tronconique extérieur (2),
- une partie annulaire de renfort (8b) a génératrices interne et externe courbes, présentant toutes les deux une concavité tournée vers l'intérieur de ladite bague de serrage (4), la courbure de la génératrice externe étant préférentiellement supérieure à la courbure de la génératrice interne de manière à délimiter une partie annulaire de renfort (8b) s'amincissant progressivement vers l'avant de l'élément tronconique extérieur (2),
- une partie annulaire centrale (8c) à génératrices interne et externe rectilignes, présentant un diamètre intérieur pouvant s'étendre depuis un diamètre minimal sensiblement égal au diamètre de la petite base de l'élément tronconique intérieur (1) jusqu'à un diamètre maximal sensiblement égal au diamètre de la grande base de ce même élément tronconique intérieur (1),
- une partie annulaire intermédiaire (8d) à génératrices interne et externe courbes, présentant toutes les deux une concavité tournée vers l'intérieur de ladite bague de serrage (4),
- et, enfin, une partie annulaire terminale (8e) à génératrice interne rectiligne, et à génératrice externe rectiligne ou courbe, dont la concavité est tournée vers l'intérieur de ladite bague de serrage (4), cette partie annulaire terminale (8e) présentant un diamètre intérieur sensiblement égal au diamètre intérieur de la partie annulaire de fixation (8a) de cette même bague de serrage (4) sur l'élément tronconique extérieur (2),

les génératrices courbes de la partie annulaire de renfort (8b) et de la partie annulaire intermédiaire (8d) venant tangenter avec les génératrices rectilignes de la partie annulaire centrale (8c), ces trois dernières parties annulaires (8a, 8b, 8c) définissant, ensemble, la lèvre annulaire (7) transversale déformable qui exerce une force centripète contre la paroi externe de l'élément tronconique intérieur (1).

8. Système de téléréglage selon la revendication 7, caractérisé en ce que les moyens de compensation des contraintes radiales s'exerçant sur la lèvre annulaire (7) transversale déformable, du fait du coulissement de l'élément tronconique intérieur (1) dans l'élément tronconique extérieur (2), sont constitués par une virole cylindrique rigide (10), ou par une gaine thermorétractable rigide (9), placée en manchon autour de la bague de serrage (4) élastique, les parois externes des parties annulaires terminale (8e) et de fixation (8a) de cette même bague de serrage (4) prenant appui en permanence sur la surface interne de ladite virole (10), ou de ladite gaine thermorétractable (9), ce qui procure un appui triangulé à ladite lèvre (7) dans toutes les positions de déploiement desdits éléments tronconiques (1, 2).

9. Système de téléréglage selon la revendication 8, caractérisé en ce que la partie annulaire terminale (8e) de la bague de serrage (4) élastique présente une rainure interne (12) dans laquelle peut s'encastrer un élément de renfort élastique du type d'un circlip (13).

10. Système de téléréglage selon l'une quelconque des revendications précédentes, caractérisé en ce que la lèvre annulaire (6) transversale d'un organe tubulaire (5) élastique, emmanché à l'extrémité arrière d'un élément tronconique intérieur (1) pour exercer une force centrifuge sur la paroi interne d'un élément tronconique extérieur (2), présente des évents longitudinaux (19) laissant l'air s'échapper ou rentrer dans le jeu desdits éléments tronconiques (1, 2) lors des manoeuvres de coulissement de l'élément intérieur (1) dans l'élément extérieur (2).

11. Système de téléréglage selon l'une quelconque des revendications précédentes, caractérisé en ce que l'organe tubulaire (5) élastique, emmanché à l'extrémité arrière d'un élément tronconique intérieur (1) pour exercer une force centrifuge sur la paroi interne d'un élément tronconique extérieur (2), est alésé selon son axe longitudinal, le diamètre de cet alésage (20) définissant une épaisseur radiale minimale pour ledit organe tubulaire (5) empêchant la lèvre annulaire (6) transversale, lors des manoeuvres de rétraction de l'élément intérieur (1) dans l'élément extérieur (2), de dépasser son dégagement annulaire (17) et de se loger entre les deux éléments tronconiques (1, 2), provoquant leur blocage.

12. Système de téléréglage selon l'une quelconque dès revendications précédentes, caractérisé en ce que la bague de serrage (4) élastique et l'organe tubulaire (5) élastique sont obtenus par usinage ou moulage d'un matériau élastique dont la dureté est comprise entre 50 et 65 sur l'échelle de dureté Shore.

13. Système de téléréglage selon l'une quelconque des revendications précédentes, caractérisé en ce que la bague de serrage (4) élastique et l'organe tubulaire (5) élastique sont réalisés par usinage d'un élastomère de polyuréthanne, préférentiellement du type connu sous les noms commerciaux "Eladur" ou "Eladip".

**Claims**

1. Length regulating system for telescopic fishing rod with interfitting truncated elements, each outer truncated element (2) comprising, at its small base, an elastic ring (4) for clamping on the outer wall of the inner truncated element (1) fitted in this outer truncated element (2), this elastic clamping ring (4) cooperating with an elastic tubular member (5) fitted in the large base of this same inner truncated element (1), this tubular member (5) comprising at least one transverse annular lip (6), indented or not, exerting a centrifugal force against the inner wall of said outer element (2), system characterized:

- on the one hand, in that the elastic clamping ring (4) presents a deformable transverse annular lip (7) exerting a centripetal force against the outer wall of the inner element (1), this annular lip (7) being provided with means (9, 15) for compensating the radial stresses exerted thereon due to the slide of the inner truncated element (1) in the outer truncated element (2) associated therewith, these compensation means maintaining said lip (7) stable about the common longitudinal axis of said truncated elements (1, 2), in all reeled-out positions of the latter;

- on the other hand, in that the elastic tubular member (5) presents at least one annular clearance (17) located towards the large base of the inner truncated element (1) with respect to the transverse annular lip (6), indented or not, which exerts a centrifugal force against the inner wall of the outer element (2), this annular clearance (17) allowing said annular lip (6) to fold progressively and completely towards the front of the rod without being jammed in the interstice of the two truncated elements (1, 2) during the manoeuvres of retraction of the inner element (1) in the outer element (2).

2. Length regulating system according to Claim 1, characterized in that the control of the length adjustment of two interfitted truncated elements (1, 2) is principally ensured by the elastic tubular member (5) fitted at the rear of the inner element (1), by evolution of the thickness of the transverse annular lip (6) as a function of the conicity of the outer truncated element (2), the annular lip (6) having to be all the wider as the conicity of the outer element (2) is greater.

3. Length regulating system according to Claim 2, characterized in that the centrifugal forces of friction acting on the outer wall of the inner truncated element (1), due to the action of the elastic clamping ring (4) disposed at the front of the outer truncated element (2), represents only about a quarter of the total friction forces necessary for a correct length adjustment of the truncated elements (1, 2) with respect to one another, the centripetal friction forces exerted by the elastic tubular member (5) placed at the rear of the inner truncated element (1) on the inner wall of the outer truncated element (2), contributing to these same total friction forces for the remaining three-quarters.

4. Length regulating system according to any one of the preceding Claims, characterized in that the elastic clamping ring (4), disposed at the front of an outer truncated element (2) for clamping an inner truncated element (1), successively comprises, from the rear towards the front of said outer element (2):
   - an annular fixing part (8a) with rectilinear inner generatrix able to be sleeve-coupled around the front end of the outer truncated element (2);
   - and a deformable transverse annular lip (7) with curved inner generatrix presenting a concavity facing the interior of said clamping ring (4).

5. Length regulating system according to Claim 4, characterized in that the means for compensating the radial stresses exerted on the deformable transverse annular lip (7) due to the slide of the inner truncated element (1) in the outer truncated element (2) are constituted by a toric swell (14) surrounding said annular lip (7) and increasing its section.

6. Length regulating system according to Claim 4, characterized in that the means for compensating the radial stresses exerted on the deformable transverse annular lip (7) due to the slide of the inner truncated element (1) in the outer truncated element (2) associated therewith are constituted by a rigid cylindrical collar (15) completely surrounding the clamping ring (4) and procuring a stable foundation for said lip (7) whilst avoiding tearing thereof.

7. Length regulating system according to any one of Claims 1 to 3, characterized in that the elastic clamping ring (4), disposed at the front of an outer truncated element (2) to clamp an inner truncated element (1), successively comprises, from the rear to the front of said outer element (2):
   - an annular fixing part (8a) with rectilinear inner generatrix, able to be sleeve-coupled around the front end of the outer truncated element (2);
   - an annular reinforcing part (8b) with curved inner and outer generatrices, both presenting a concavity facing the interior of said clamping ring (4), the curvature of the outer generatrix preferably being greater than the curvature of the inner generatrix so as to define an annular reinforcing part (8b) progressively thinning towards the front of the outer truncated element (2);
   - a central annular part (8c) with rectilinear inner and outer generatrices, presenting an inner diameter which may extend from a minimum diameter substantially equal to the diameter of the small base of the inner truncated element (1) up to a maximum diameter substantially equal to the diameter of the large base of this same inner truncated element (1);
   - an intermediate part (8d) with curved inner and outer generatrices, both presenting a concavity facing the interior of said clamping ring (4);
   - and, finally, a terminal annular part (8e) with rectilinear inner generatrix, and with rectilinear or curved outer generatrix, whose concavity faces towards the interior of said clamping ring (4), this terminal annular part (8e) presenting an inner diameter substantially equal to the inner diameter of the annular part (8a) for fixing this same clamping ring (4) on the outer truncated element,

the curved generatrices of the annular reinforcing part (8b) and of the intermediate annular part (8d) drawing a tangent with the rectilinear generatrices of the central annular part (8c), these three latter annular parts (8a, 8b, 8c) together defining the deformable transverse annular lip (7) which exerts a centripetal force against the outer wall of the inner truncated element (1).

8. Length regulating system according to Claim 7, characterized in that the means for compensating the radial stresses exerted on the deformable transverse annular lip (7), due to the slide of the inner truncated element (1) in the outer truncated element (2), are constituted by a rigid cylindrical collar (10), or by a rigid heat-shrinkable sheath (9) placed as a sleeve around the elastic clamping ring (4), the outer walls of the annular terminal (8e) and fixing (8a) parts of this same clamping ring (4) permanently abutting on the inner surface of said collar (10), or of said heat-shrinkable sheath (9), which procures a triangulated bearing for said lip (7) in all reeled-out positions of said truncated elements (1, 2).

9. Length regulating system according to Claim 8, characterized in that the terminal annular part (8e) of the elastic clamping ring (4) presents an inner groove (12) in which may fit an elastic reinforcing element of the circlip type (13).

10. Length regulating system according to any one of the preceding Claims, characterized in that the transverse annular lip (6) of an elastic tubular member (5), fitted at the rear end of an inner truncated element (1) to exert a centrifugal force on the inner wall of an outer truncated element (2), presents longitudinal vents (19) allowing the air to escape or enter in the clearance of said truncated elements (1, 2) during the sliding manoeuvres of the inner element (1) in the outer element (2).

11. Length regulating system according to any one of the preceding Claims, characterized in that the elastic tubular member (5), fitted at the rear end of an inner truncated element (1) to exert a centrifugal force on the inner wall of an outer truncated element (2), is bored along its longitudinal axis, the diameter of this bore (20) defining a minimum radial thickness for said tubular member (5) preventing the transverse annular lip (6), during the manoeuvres of retraction of the inner element (1) in the outer element (2), from passing beyond its annular clearance (17) and from being housed between the two truncated elements (1, 2), provoking blockage thereof.

12. Length regulating system according to any one of the preceding Claims, characterized in that the elastic clamping ring (4) and the elastic tubular member (5) are obtained by machining or moulding an elastic material whose hardness is included between 50 and 65 on the Shore hardness scale.

13. Length regulating system according to any one of the preceding Claims, characterized in that the elastic clamping ring (4) and the elastic tubular member (5) are made by machining a polyurethane elastomer, preferably of the type known under the Trademarks "Eladur" or "Eladip".

**Patentansprüche**

1. System zur Längenveränderung für eine teleskopische Angelrute aus kegelstumpfförmigen, ineinandersetzbaren Elementen, bei dem jedes kegelstumpfförmige äußere Element (2) an seiner kleinen Basis einen elastischen Klemmring (4) an der äußeren Wand des inneren, kegelstumpfförmigen Elements (1) aufweist, welches in das kegelstumpfförmige, äußere Element (2) eingesetzt ist, wobei dieser elastische Klemmring (4) mit einem elastischen, rohrförmigen Organ (5) zusammenarbeitet, welches in dem großen Grundteil dieses kegelstumpfförmigen, inneren Elements (1) vorgesehen ist, wobei das rohrförmige Organ (5) wenigstens eine transversale mit Zacken oder nicht versehene Ringlippe (6) aufweist, welche eine Zentrifugalkraft gegen die innere Wand dieses äußeren Elements (2) ausübt, dadurch **gekennzeichnet** , daß sich dieses System durch folgendes auszeichnet:

- daß einerseits der elastische Klemmring (4) eine transversale, verformbare Ringlippe (7) aufweist, welche eine Zentripetalkraft gegen die äußere Wand des inneren Elements (1) ausübt, wobei die Ringlippe (7) mit Mitteln (9, 15) zur Kompensation von Radialspannungen versehen ist, welche auf diese zum Zwecke einer Gleitbewegung des kegelstumpfförmigen, inneren Elements (1) in dem zugeordneten, kegelstumpfförmigen äußeren Element (2) einwirken, und wobei diese Kompensationsmittel die Lippe (7) in stabiler Weise um die gemeinsame Längsachse der kegelstumpfförmigen Elemente (1,2) in allen Ausfahrstellungen der letztgenannten hält,

- und daß andererseits das elastische, rohrförmige Organ (5) wenigstens eine Ringausnehmung (17) aufweist, welche auf der Seite der großen Basis des kegelstumpfförmigen, inneren Elements (1) bezüglich der transversalen, mit Zacken oder nicht versehenen Ringlippe (6) liegt, und welche eine Zentrifugalkraft gegen die innere Wand des äußeren Elements (2) ausübt, wobei die Ringausnehmung (17) gestattet, daß die Ringlippe (6) sich allmählich und vollständig in Richtung der Vorderseite der Rute einzieht, ohne daß sie im Zwischenraum der beiden kegelstumpfförmigen Elemente während der Einzugsbewegung des inneren Elements (1) in das äußere Element (2) festgeklemmt wird.

2. System zur Längenveränderung nach Anspruch 1, dadurch gekennzeichnet, daß die Längenveränderung der beiden kegelstumpfförmigen, ineinandersetzbaren Elemente (1,2) hauptsächlich durch das rohrförmige, elastische, hinter dem inneren Element (1) aufgepreßte Organ dadurch sichergestellt wird, daß sich die Dicke der transversalen Ringlippe (6) in Abhängigkeit von der Konizität des kegelstumpfförmigen, äußeren Elements (2) anpaßt, und daß die Ringlippe (6) wesentlich größer als die Konizität des äußeren Elements (2) und stärker ist.

3. System zur Längenveränderung nach Anspruch 2, dadurch gekennzeichnet, daß die Zentrifugalreibungskräfte auf die äußere Wand des kegelstumpfförmigen, inneren Elements (1) durch die Wirkung des elastischen Klemmrings (4) wirken, welcher vor dem kegelstumpfförmigen, äußeren Element (2) angeordnet ist, daß diese Kräfte nur ein Viertel der Gesamtreibungskräfte darstellen, welche zur korrekten Längenveränderung der kegelstumpfförmigen Elemente (1, 2) untereinander erforderlich sind, und daß die Zentripetalreibungskräfte, welche durch das elastische, rohrförmige Organ (5), welches hinter dem inneren, kegelstumpfförmigen Element (1) liegt, auf die innere Wand des kegelstumpfförmigen, äußeren Elements (2) aufgebracht werden, einen Beitrag zu diesen Gesamtreibungskräften der verbleibenden drei Viertel leisten.

4. System zur Längenveränderung nach einem der vorangehenden Ansprüche, dadurch gekennzeichnet, daß der elastische Klemmring (4), welcher vor einem äußeren, kegelstumpfförmigen Element (2) zum Umschließen eines inneren, kegelstumpfförmigen Elements (1) angeordnet ist, aufeinanderfolgend von hinten nach vorne bezüglich des äußeren Elements (2) gesehen folgendes aufweist:

    - ein ringförmiges Fixierteil (8a) mit einer geradlinigen, inneren Erzeugenden, welches muffenförmig um das Ende an dem Vorderteil des kegelstumpfförmigen, äußeren Elements (2) vorgesehen sein kann,

    - eine transversale, verformbare Ringlippe (7) mit einer gekrümmten, inneren Erzeugenden, welche eine Ausnehmung bildet, welche sich um das Innere des Klemmrings (4) erstreckt.

5. System zur Längenveränderung nach Anspruch 4, dadurch gekennzeichnet, daß die Mittel zur Kompensation der Radialspannungen auf die transversale, verformbare Ringlippe (7) derart einwirken, daß das innere, kegelstumpfförmige Element (1) in dem äußeren, kegelstumpfförmigen Element (2) eine Gleitbewegung ausführt und von einer torusförmigen Erhebung (14) gebildet wird, welche die Ringlippe (7) umgibt und ihren Querschnitt vergrößert.

6. System zur Längenveränderung nach Anspruch 4, dadurch gekennzeichnet, daß die Mittel zur Kompensation der Radialspannungen, welche auf die transversale, verformbare Ringlippe (7) derart wirken, daß das innere, kegelstumpfförmige Element (1) in dem äußeren, zugeordneten, kegelstumpfförmigen Element (2) eine Gleitbewegung ausführen, den Klemmring (4) vollständig umgeben und an dieser Lippe (7) eine stabile Lage unter Vermeidung einer Verkeilung hervorrufen.

7. System zur Längenveränderung nach einem der Ansprüche 1 bis 3, dadurch gekennzeichnet, daß der elastische Klemmring (4), welcher vor einem äußeren, kegelstumpfförmigen Element (2) zum Umschließen eines inneren, kegelstumpfförmigen Elementes (1) angeordnet ist, von hinten nach vorne bei dem äußeren Element (2) gesehen aufeinanderfolgend folgendes aufweist:

    - ein ringförmiges Fixierteil (8a) mit einer geradlinigen, inneren Erzeugenden, welches in Form eines Hülsenteils um das vordere Ende des äußeren, kegelstumpfförmigen Elements (2) vorgesehen sein kann,

    - ein Versteifungsringteil (8b) mit inneren und äußeren, gekrümmten Erzeugenden, welche beide eine konkave Austiefung aufweisen, welche zum Innern des Klemmrings (4) weist, wobei die Krümmung der äußeren Erzeugenden vorzugsweise größer als die Krümmung der inneren Erzeugenden derart ist, daß ein Versteifungsringteil (8b) begrenzt wird, welches sich progressiv in Richtung nach vorne von dem äußeren, kegelstumpfförmigen Element (2) verjüngt,

    - ein ringförmiges Mittelteil (8c) mit einer geradlinigen, inneren und äußeren Erzeugenden, welches einen Innendurchmesser aufweist, der zu einem minimalen Durchmesser verlaufen kann, der im wesentlichen gleich dem Durchmesser der kleinen Basis des inneren, kegelstumpfförmigen Elements (1) ist und bis zu einem maximalen Durchmesser verlaufen kann, der im wesentlichen gleich dem Durchmesser der großen Basis des gleichen, inneren, kegelstumpfförmigen Elements (1) ist,

- ein ringförmiges Zwischenteil (8d) mit inneren und äußeren, gekrümmten Erzeugenden, welche beide eine konkave Austiefung aufweisen, die zum Inneren des Klemmrings (4) weist,

- und schließlich ein ringförmiges Endteil (8e) mit einer geradlinigen, inneren Erzeugenden und einer geradlinigen oder gekrümmten äußeren Erzeugenden, deren konkave Austiefung zum Innern des Klemmrings (4) weist, wobei das ringförmige Endteil (8e) einen Innendurchmesser aufweist, der im wesentlichen gleich dem Innendurchmesser des ringförmigen Fixierteils (8e) ein und desselben Klemmrings (4) auf dem kegelstumpfförmigen, äußeren Element (2) ist,

- wobei die gekrümmten Erzeugenden des ringförmigen Verstärkungsteils (8b) und des ringförmigen Zwischenteils (8d) als Tangente zu den geradlinigen Erzeugenden des ringförmigen Mittelteils (8c) verlaufen, und wobei die drei letztgenannten ringförmigen Teile (8a, 8b, 8c) zusammen die transversale, verformbare Ringlippe (7) bilden, welche eine Zentripetalkraft gegen die äußere Wand des inneren, kegelstumpfförmigen Elements (1) ausübt.

8. System zur Längenveränderung nach Anspruch 7, dadurch gekennzeichnet, daß die Mittel zur Kompensation der Radialspannungen, welche auf die transversale, verformbare Ringlippe (7) derart einwirken, daß das kegelstumpfförmige, innere Element (1) in dem kegelstumpfförmigen, äußeren Element (2) eine Gleitbewegung ausführt, von einem zylindrischen, starren Ring (10) oder von einer warmschrumpfbaren, starren Hülse (9) gebildet wird, welche als Mantel um den elastischen Klemmring (4) vorgesehen ist, daß die äußeren Wände der ringförmigen Endteile (8e) und der Fixierteile (8a) ein und des gleichen Klemmrings (4) ständig zur Anlage auf der inneren Fläche des Rings (10) oder der warmschrumpfbaren Hülse (9) kommen und eine dreieckförmige Auflage an der Lippe (7) in allen Auszugsstellungen der kegelstumpfförmigen Elemente (1, 2) bilden.

9. System zur Längenveränderung nach Anspruch 8, dadurch gekennzeichnet, daß das ringförmige Endteil (8e) des elastischen Klemmrings (4) eine Innennut (12) aufweist, in die ein elastisches Versteifungselement in Form eines Sicherungsrings (13) eingesetzt werden kann.

10. System zur Längenveränderung nach einem der vorangehenden Ansprüche, dadurch gekennzeichnet, daß die transversale Ringlippe (6) eines rohrförmigen, elastischen Organs (5), welche auf das hintere Ende eines inneren, kegelstumpfförmigen Elements (1) zum Ausüben einer Zentrifugalkraft auf die innere Wand eines kegelstumpfförmigen äußeren Elements (2) aufgepreßt ist, Längsausnehmungen (19) aufweist, über welche Luft durch den Zwischenraum der kegelstumpfförmigen Elemente (1, 2) während der Gleitbewegung des inneren Elements (1) in dem äußeren Element (2) aus- oder eintreten kann.

11. System zur Längenveränderung nach einem der vorangehenden Ansprüche, dadurch gekennzeichnet, daß das elastische, rohrförmige Organ (5), welches auf das hintere Ende eines kegelstumpfförmigen, inneren Elementes (1) zum Ausüben einer Zentrifugalkraft auf die innere Wand eines äußeren, kegelstumpfförmigen Elements (2) vorgesehen ist, längs seiner Längsachse mit einer Bohrung versehen ist, wobei der Durchmesser dieser Bohrung (20) eine minimale radiale Dicke für das rohrförmige Organ (5) begrenzt, welche die transversale Querlippe (6) während der Einzugsbewegung des inneren Elements (1) in das äußere Element (2) daran hindert, daß es an dem Ringteil (17) vorbeigeht und zwischen den beiden kegelstumpfförmigen Elementen (1, 2) zu liegen kommt und eine Blockierung hervorruft.

12. System zur Längenveränderung nach einem der vorangehenden Ansprüche, dadurch gekennzeichnet, daß der elastische Klemmring (4) und das elastische, rohrförmige Organ (5) durch Bearbeiten oder Gießen eines elastischen Materials erhalten werden, dessen Härte nach der Shorehärteskala zwischen 50 und 65 liegt.

13. System zur Längenveränderung nach einem der vorangehenden Ansprüche, dadurch gekennzeichnet, daß der elastische Klemmring (4) und das rohrförmige, elastische Organ (5) durch Bearbeiten eines Polyurethanelastomers vorzugsweise des Typs erhalten werden, welcher im Handel unter der Bezeichnung "Eladur" oder "Eladip" bekannt ist.

*Fig 1a*

*Fig 1b*

EP 0 417 011 B1

Fig 2a

Fig 2b

Fig 2c

14

*Fig 3*

8e   8a   10
12
8d   8c   8b
1
13
4   2

*Fig 4*          *Fig 5*

14   8a          8a
7    1    2      7
4                1    2
                 16   15

19a   19
20    5    6

*Fig 6*          19a
                 19
                 20    6
                 5   *Fig 7*
1